# EUROPÄISCHE PATENTSCHRIFT

(11) **EP 2 993 541 B1**
(45) Veröffentlichungstag und Bekanntmachung des Hinweises auf die Patenterteilung: **18.03.2020**
(21) Anmeldenummer: 15177419.7
(22) Anmeldetag: 20.07.2015
(51) Int. Cl.: G05B 19/418, G01N 21/88

(54) **VERFAHREN ZUR QUALITÄTSBEURTEILUNG EINES MITTELS EINES ADDITIVEN HERSTELLUNGSVERFAHRENS HERGESTELLTEN BAUTEILS**
PROCESS FOR THE EVALUATION OF THE QUALITY OF A COMPONENT WHICH IS REALIZED BY AN ADDITIVE MANUFACTURING PROCESS
PROCÉDÉ POUR ÉVALUER LA QUALITÉ D'UN COMPOSANT FABRIQUÉ À L'AIDE D'UN PROCÉDÉ DE FABRICATION ADDITIF

(30) Priorität: 21.08.2014 DE 102014216567
(43) Veröffentlichungstag der Anmeldung: 09.03.2016
(73) Patentinhaber: MTU Aero Engines AG, 80995 München (DE)
(72) Erfinder: Heß, Thomas, 81541 München (DE); Ladewig, Alexander, 83707 Bad Wiessee (DE)

(56) Entgegenhaltungen:
- DE-A1-102004 063 388
- DE-A1-102011 113 445
- TUMER I Y ET AL: "CHARACTERIZATION OF SURFACE FAULT PATTERNS WITH APPLICATION TO A LAYERED MANUFACTURING PROCESS", JOURNAL OF MANUFACTURING SYSTEMS, SOCIETY OF MANUFACTURING ENGINEERS, DEARBORN, MI, US, Bd. 17, Nr. 1, 1. Januar 1998 (1998-01-01) , Seiten 23-36, XP000668608, ISSN: 0278-6125

## Beschreibung

Die Erfindung betrifft ein Verfahren zur Qualitätsbeurteilung eines mittels eines additiven Herstellungsverfahrens hergestellten Bauteils.

Additive Herstellungsverfahren bezeichnen Prozesse, bei denen anhand von digitalen 3D-Konstruktionsdaten Material schichtweise abgelagert wird, um ein Bauteil generativ aufzubauen. Damit unterscheiden sich additive Herstellungsverfahren von konventionellen abtragenden oder urformenden Fertigungsmethoden. Anstatt zum Beispiel ein Werkstück aus einem festen Block herauszufräsen, bauen additive Herstellungsverfahren Bauteile Schicht für Schicht aus einem oder mehreren Werkstoffen auf. Beispiele für additive Herstellungsverfahren sind generative Lasersinter- oder Laserschmelzverfahren, die beispielsweise zur Herstellung von Bauteilen für Flugtriebwerke verwendet werden. Ein solches Verfahren ist beispielsweise bereits aus der DE 10 2004 017 769 B4 bekannt. Beim selektiven Laserschmelzen werden dünne Pulverschichten des oder der verwendeten Werkstoffe auf eine Bauplattform aufgebracht und mit Hilfe eines oder mehrerer Laserstrahlen lokal aufgeschmolzen und verfestigt. Anschließend wird die Bauplattform abgesenkt, eine weitere Pulverschicht aufgebracht und erneut lokal verfestigt. Dieser Zyklus wird solange wiederholt, bis das fertige Bauteil erhalten wird. Das fertige Bauteil kann anschließend bei Bedarf weiterbearbeitet oder sofort verwendet werden. Beim selektiven Lasersintern wird das Bauteil in ähnlicher Weise durch laserunterstütztes Sintern von pulverförmigen Werkstoffen hergestellt.

Allerdings werden Lasersinter- und -schmelzverfahren bislang nicht zur Serienproduktion von Bauteilen für Flugzeugtriebwerke verwendet. Insbesondere für den Einsatz hochbelastbarer Bauteile, die durch generative Laserverfahren hergestellt werden, ist zudem eine Prozesszulassung erforderlich, die die Überwachung diverser Prozessparameter wie beispielsweise Laserleistung, Beschaffenheit und Zustand des Werkstoffpulvers und dergleichen voraussetzt. Die einzelnen Prozessparameter müssen dabei im Rahmen einer Prozessüberwachung mit einer jeweils angepassten, aufwändigen Messmethodik in Intervallen überwacht werden. Eine an sich bekannte Methode zur Überwachung des Schichtaufbaus ist die optische Tomographie, die für jede Bauteilschicht ein Bild liefert, dessen Helligkeitswerte Rückschlüsse auf die Qualität des additiven Fertigungsprozesses ermöglichen. Die Quantifizierung der Helligkeitswerte kann auf Grund der Menge der Einflussgrößen aber bis heute nicht an absoluten Werten festgemacht werden. Auch ein guter Soll-Prozess unterliegt unterschiedlichen Einflüssen wie etwa der Bauteilgeometrie, der Bauplattformbelegung, der Position innerhalb des Bauteils etc. und kann damit zu verschiedenen Grauwertbereichen führen, die aber trotzdem ein qualitativ grundsätzlich gutes Bauteil charakterisieren können.

Aus der DE 10 2011 113 445 A1 ist ein Verfahren zur generativen Herstellung eines Bauteils bekannt, wobei ein Zyklus mit den Schritten Aufbringen einer Schicht mit verfestigbarem Material und lokales Verfestigen von Material in dieser Schicht mehrfach wiederholt und in wenigstens einem Zyklus wenigstens teilweise automatisiert eine physikalische Grösse der Vorrichtung und/oder des entstehenden Bauteils erfasst und mit einer vorgegebenen Referenzgrösse verglichen wird.

Aufgabe der vorliegenden Erfindung ist es, ein Verfahren zu schaffen, mittels welchem eine zumindest weitgehend automatisierte und quantifizierbare Qualitätsbeurteilung eines mittels eines additiven Herstellungsverfahrens hergestellten Bauteils ermöglicht ist.

Die Aufgabe wird erfindungsgemäß durch ein Verfahren mit den Merkmalen des Patentanspruchs 1 zur Qualitätsbeurteilung eines mittels eines additiven Herstellungsverfahrens hergestellten Bauteils gelöst. Vorteilhafte Ausgestaltungen mit zweckmäßigen Weiterbildungen der Erfindung sind in den abhängigen Ansprüchen angegeben.

Ein Verfahren, mittels welchem eine zumindest weitgehend automatisierte und quantifizierbare Qualitätsbeurteilung eines mittels eines additiven Herstellungsverfahrens hergestellten Bauteils ermöglicht ist, umfasst erfindungsgemäß zumindest die Schritte a) Bereitstellen eines ersten Datensatzes, wobei der erste Datensatz Absolutgrenzwerte umfasst, die jeweils einen maximal zulässigen Wertebereich an einem zugeordneten Bauteilort des herzustellenden Bauteils charakterisieren, b) Erfassen eines zweiten Datensatzes mittels einer Erfassungseinrichtung, wobei der zweite Datensatz mit dem ersten Datensatz korrespondierende Ist-Werte umfasst, die den zugeordneten Bauteilort des hergestellten Bauteils charakterisieren, und c) Vergleichen des ersten Datensatzes und des zweiten Datensatzes mittels einer Recheneinrichtung. Im Schritt c1) wird das Bauteil dann als qualitativ grundsätzlich nicht in Ordnung klassifiziert, wenn wenigstens ein Ist-Wert außerhalb seines zugeordneten maximal zulässigen Wertebereichs liegt. Alternativ wird das Bauteil in Schritt c2) als qualitativ grundsätzlich in Ordnung klassifiziert, wenn kein Ist-Wert außerhalb seines zugeordneten maximal zulässigen Wertebereichs liegt. Wenn das Bauteil als qualitativ grundsätzlich nicht in Ordnung klassifiziert wurde, wird auf das Vorliegen einer gravierenden Störung oder Fehlfunktion geschlossen. Wenn das Bauteil als qualitativ grundsätzlich in Ordnung klassifiziert wurde, kann davon ausgegangen werden, dass der additive Herstellungsprozess und die Erfassungseinrichtung grundsätzlich funktionieren. In diesem Fall wird in einem anschließenden Schritt d) ein dritter Datensatz bereitgestellt, welcher Mittelwerte umfasst, die mittels der Recheneinrichtung aus mehreren Ist-Werten des zweiten Datensatzes ermittelt werden, wobei die mehreren Ist-Werte einen zusammenhängenden Bauteilbereich, bestehend aus mehreren Bauteilorten, charakterisieren. Dies führt zu einer entsprechenden Datenreduktion, da mehrere gemessene Ist-Werte eines Bauteilbereichs zu einem Mittelwert zusammengefasst werden. Anschließend wird in Schritt e) wenigstens eine bauteilgeometrieabhängige Ausgleichsfunktion anhand des dritten Datensatzes mittels der Recheneinrichtung ermittelt. Mit anderen Worten wird in Schritt e) eine "Best-Fit-Funktion", das heißt eine Ausgleichs- oder Näherungsfunktion durch alle Mittelwerte für das gesamte Bauteil ermittelt. Die Art der Ausgleichsfunktion kann dabei grundsätzlich jede geeignete mathematische Beschreibung sein, die den Verlauf der Mittelwerte durch das Bauteil möglichst genau abbildet. In Schritt f) werden dann bauteilgeometrieabhängige Schwellenwerte mittels der Recheneinrichtung ermittelt, wobei die Schwellenwerte einen zulässigen Streubereich der Ist-Werte um durch die Ausgleichsfunktion vorgegebene Soll-Werte charakterisieren. Mit anderen Worten werden in Schritt f) Schwellenwerte um diese Ausgleichsfunktion definiert und charakterisieren damit einen Soll-Prozess bzw. Soll-Werte. Die Schwellenwerte entsprechend damit dynamischen, bauteilbereichsabhängigen Grenzwerten und begrenzen einen zulässigen Streubereich der einzelnen Bauteilbereiche. In einem folgenden Schritt g) wird mittels der Recheneinrichtung geprüft, ob wenigstens ein Ist-Wert außerhalb des durch die Schwellenwerte charakterisierten Streubereichs liegt. Wenn kein Ist-Wert außerhalb des Streubereichs liegt, wird das Bauteil in Schritt g1) als qualitativ in Ordnung klassifiziert. Wenn wenigstens ein Ist-Wert außerhalb des Streubereichs liegt, werden in Schritt g2) alle Ist-Werte, die außerhalb des Streubereichs liegen, in einem fünften Datensatz zusammengefasst, wonach die Bauteilqualität anhand des fünften Datensatzes und wenigstens eines vorgegebenen Qualitätskriteriums beurteilt wird. Mit anderen Worten wird zunächst geprüft, ob ein oder mehrere Ist-Werte außerhalb des einen Soll-Prozess charakterisierten Streubereichs liegen. Falls dies nicht der Fall ist, entspricht das Bauteil der gewünschten Norm und wird als qualitativ in Ordnung bzw. als höchste Güteklasse eingestuft. Im anderen Fall werden alle von der Norm abweichenden Ist-Werte isoliert bzw. im fünften Datensatz gespeichert. In der weiteren Auswertung wird dann nur noch dieser fünfte Datensatz betrachtet, wodurch eine weitere Datenreduktion gegeben ist. Die Beurteilung der Bauteilqualität anhand des fünften Datensatzes und wenigstens eines vorgegebenen Qualitätskriteriums kann dann zu unterschiedlichen Ergebnissen führen. Beispielsweise kann das Bauteil weiterhin als in Ordnung klassifiziert, jedoch einer geringeren Güteklasse zugeordnet werden. Alternativ kann die Beurteilung aber auch ergeben, dass die Abweichungen einzeln oder in Summe so gravierend von der Soll-Qualität abweichen, dass das Bauteil als qualitativ nicht in Ordnung einzustufen ist. Damit ist eine vollständig oder zumindest weitgehend automatisierte und quantifizierte Qualitätsbeurteilung und Qualitätssicherung von Bauteilen ermöglicht, die durch ein additives Herstellungsverfahren hergestellt wurden. Es ist dabei zu betonen, dass dem Fachmann bewusst ist, dass die Reihenfolge verschiedener Verfahrensschritte grundsätzlich auch verändert werden kann. Beispielsweise können die Schritte a) und b) vertauscht werden. Ebenso ist zu betonen, dass das Verfahren nicht nur für vollständige Bauteile, sondern auch für erst teilweise hergestellte Bauteile bzw. für einzelne Bauteilschichten angewendet werden kann.

In einer vorteilhaften Ausgestaltung der Erfindung wird als Ermittlungseinrichtung eine optische Tomographieeinrichtung verwendet wird. Vorzugsweise liefert die Ermittlungseinrichtung dabei Graustufenbilder mit mindestens 16 Bit Tiefe. Dies ermöglicht eine schnelle und präzise Ermittlung sowohl von Absolutgrenzwerten für den ersten Datensatz als auch von Ist-Werten für den zweiten Datensatz.

Weitere Vorteile ergeben sich, indem wenigstens ein Absolutgrenzwert des ersten Datensatzes anhand eines Erfahrungswerts und/oder anhand eines Messwerts eines Referenzbauteils mit fehlerfreiem Gefüge vorgegeben wird. Mit anderen Worten erfolgt die Festlegung der Absolutgrenzen über Erfahrungswerte und/oder über Testbaujobs bzw. Schliffe von diesen, welche gezeigt haben, dass sie ein fehlerfreies und dichtes Gefüge gebildet haben.

In einer weitere vorteilhaften Ausgestaltung der Erfindung ist vorgesehen, dass das additive Herstellungsverfahren und/oder die Ermittlungseinrichtung kontrolliert wird, wenn das Bauteil in Schritt c1) als grundsätzlich nicht in Ordnung klassifiziert wird. Wenn in Schritt c1) festgestellt wurde, dass das Bauteil grundsätzlich nicht in Ordnung ist, da wenigstens ein Ist-Wert außerhalb des durch die Absolutgrenzwerte definierten Zulässigkeitsbereichs liegt, ist davon auszugehen, dass ein schwerwiegender Fehler im Herstellungsverfahren und/oder bei der Ermittlungseinrichtung vorliegt. Eine Kontrolle des additiven Herstellungsverfahrens kann beispielsweise die Überprüfung einer Laserleistung, des verwendeten Materials oder anderer Prozessparameter wie beispielsweise den 3D-Daten des Bauteils umfassen. Alternativ oder zusätzlich wird die korrekte Funktion der Ermittlungseinrichtung geprüft. Auf diese Weise können grundlegende Störungen identifiziert und behoben werden, wodurch eine hohe Bauteilqualität und ein geringer Ausschuss sichergestellt werden.

In einer weiteren vorteilhaften Ausgestaltung der Erfindung werden die Mittelwerte des dritten Datensatzes als arithmetisches Mittel und/oder als Modus und/oder als Median und/oder als geometrisches Mittel und/oder als harmonisches Mittel und/oder als quadratisches Mittel und/oder als kubisches Mittel ermittelt. Dadurch erhält man für jeden Bauteilbereich einen Datenpunkt, der der die Lage der Ist-Werte in Bezug auf den betrachteten Bauteilbereich beschreibt. In Abhängigkeit des betrachteten Bauteils bzw. Bauteilbereichs können die Mittelwerte nach unterschiedlichen Rechenvorschriften ermittelt werden, wodurch unterschiedliche Kontexte optimal berücksichtigt werden können, um die jeweilige Verteilung der betrachteten Ist-Werte zu charakterisieren.

Weitere Vorteile ergeben sich, wenn die Mittelwerte des dritten Datensatzes anhand von Ist-Werten ermittelt werden, die eine belichtete Schichtfläche des Bauteils und/oder einen Bereich einer belichteten Schichtfläche des Bauteils charakterisieren. Mit anderen Worten werden als Bauteilbereich die einzelnen, während des additiven Herstellungsverfahrens entstehenden Bauteilschichten oder Teilbereiche davon verwendet. Hierdurch werden Mittelwerte erhalten, die jeweils eine Bauteilschicht charakterisieren. Dies erlaubt eine besonders einfache und schnelle Qualitätsbeurteilung des gesamten Bauteils sowie der einzelnen Bauteilschichten, so dass bei ermittelten Abweichungen in einer bestimmten Schicht eine entsprechend schnelle und einfache Anpassung des additiven Herstellungsverfahrens ermöglicht ist.

Weitere Vorteile ergeben sich, wenn die Ist-Werte im fünften Datensatz zur Beurteilen der Bauteilqualität zunächst anhand wenigstens eines Gewichtungsfaktors gewichtet werden. Dies erlaubt eine verbesserte Qualitätsbeurteilung, da somit wichtigere oder zuverlässigere Ist-Werte größeren Einfluss auf die Qualitätsbeurteilung haben als weniger wichtige oder unzuverlässige Ist-Werte.

In einer weiteren vorteilhaften Ausgestaltung der Erfindung ist vorgesehen, dass als Gewichtungsfaktor eine Anzeigenkennzahl und/oder eine Anzahl der Anzeigen im Bauteil und/oder ein Abstand zu einer benachbarten Anzeige und/oder eine Position im Bauteil verwendet wird. Hierdurch wird eine verbesserte Fehlergewichtung ermöglicht. Die Anzeigenkennzahl beschreibt dabei grundsätzlich einen Typ einer bestimmten Prozessabweichung, die eine bestimmte Auswirkung auf das Bauteil besitzt. Dementsprechend hat es sich als vorteilhaft gezeigt, wenn verschiedene Anzeigenkennzahlen für unterschiedliche Prozessabweichungen verwendet werden. Der Abstand zwischen benachbarten Anzeigen kann als Maß für die Schwere einer zugeordneten Prozessabweichung bzw. eines zugeordneten Fehlers herangezogen werden. Alternativ oder zusätzlich kann die Position einer Prozessabweichung bzw. eines Fehlers innerhalb des Bauteils zur Bewertung des entsprechenden Fehlers herangezogen werden. Hintere Bereiche im Bauteil sind dabei üblicherweise stärker zu bewerten als vordere Bereiche.

In weiterer Ausgestaltung der Erfindung hat es sich als vorteilhaft gezeigt, wenn als Qualitätskriterium ein Farbwert und/oder ein Grauwert und/oder eine Größe und/oder eine Form verwendet wird. Beispielsweise können für die Bildung der Anzeigenkennzahl verschiedene Werte aus der Bildverarbeitung verwendet werden, um die Art bzw. den Typ und die Schwere der jeweils vorliegenden Prozessabweichung zu identifizieren.

Weitere Merkmale der Erfindung ergeben sich aus den Ansprüchen, dem Ausführungsbeispiel sowie anhand der Zeichnungen. Die vorstehend in der Beschreibung genannten Merkmale und Merkmalskombinationen sowie die nachfolgend im Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: ein Flussdiagramm, welches die Ermittlung von Schichtdaten eines generativ hergestellten Bauteils zeigt; und
- Fig. 2: ein Flussdiagramm, das die Qualitätsbeurteilung des hergestellten Bauteils zeigt.

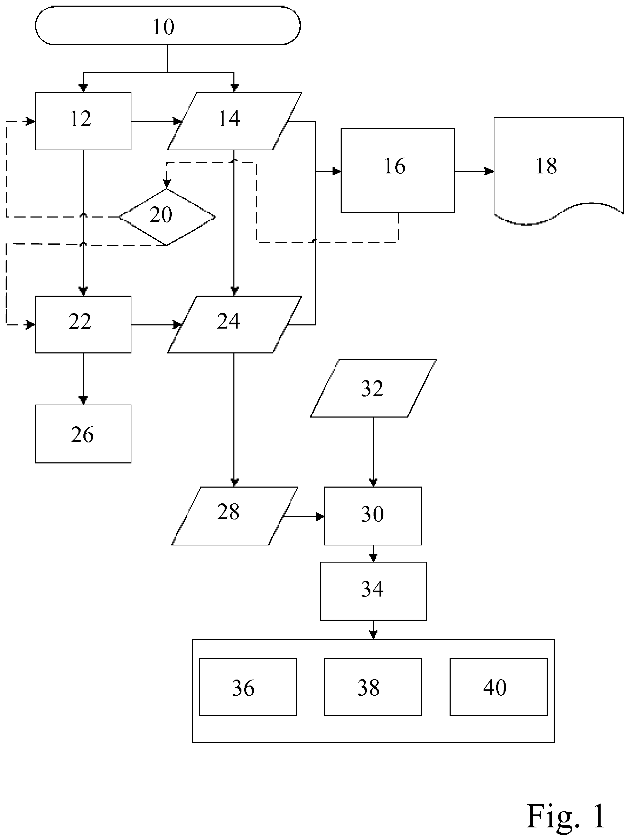

Fig. 1 zeigt ein Flussdiagramm, welches ein Ausführungsbeispiel einer Ermittlung von Schichtdaten eines generativ hergestellten Bauteils näher verdeutlicht. Das Verfahren kann grundsätzlich vollständig computerbasiert durchgeführt werden. Bei dem Bauteil kann es sich um ein Bauteil für ein Flugtriebwerk und/oder eine Strömungsmaschine handeln.

In einem ersten Schritt 10 wird eine additive Herstellung des Bauteils, beispielsweise mittels eines Lasersinter- und -schmelzverfahrens, gestartet. Das Bauteil wird dabei in an sich bekannter Weise iterativ aus mehreren Schichten anhand von vorgegebenen 3D-Baudaten gebildet. In Schritt 12 wird für jede Schicht n mittels einer als optischer Tomograph (OT) ausgebildeten Ermittlungseinrichtung (nicht gezeigt) ein 16 Bit-Grauwertbild aufgenommen, wobei jedes Pixel des Grauwertbilds einen Helligkeitswert (Ist-Wert) an einem Bauteilort des herzustellenden Bauteils codiert. Alle Grauwertbilder werden zu einem zweiten Datensatz mit Ist-Werten des Bauteils zusammengefasst. In Schritt 14 werden für jedes Grauwertbild der maximale Grauwert und die Summe der Grauwerte über alle Pixel des Grauwertbilds ermittelt. In Schritt 16 wird geprüft, ob die ermittelten Ist-Werte teilweise oder vollständig außerhalb eines maximal zulässigen Wertebereichs liegen, der durch einen ersten Datensatz mit Absolutgrenzwerten für das herzustellende Bauteil vorgegeben ist. Die Absolutgrenzwerte definieren einen plausiblen Bereich, in dem der Soll-Prozess für jedes Bauteil liegen darf. Die Definition der Absolutgrenzwerte erfolgt über Erfahrungswerte bzw. über Testbaujobs und Schliffe von diesen, welche gezeigt haben, dass sie ein fehlerfreies und dichtes Gefüge gebildet haben. Diese Absolutgrenzwerte dienen vorwiegend dazu, eine massive Veränderung der Laserleistung oder andere Effekte wie falsch gewählte Bauparameter oder dergleichen zuverlässig auszuschließen. Auch grobe Fehlfunktionen des OT-Systems können so detektiert und gegebenenfalls behoben werden. Daher werden die Ist-Werte mit ihren korrespondierenden Absolutgrenzwerten verglichen. Die Absolutgrenzwerte sind im vorliegenden Beispiel ebenfalls als Grauwerte, das heißt als Helligkeitswerte codiert.

In Schritt 18 kann eine grundsätzlich optionale Dokumentation erfolgen. Beispielsweise können die ermittelten Schichtbilder, der Ort und/oder die Anzahl ermittelter Überschreitungen von Absolutgrenzwerten für eine bestimmte Bauteilschicht, die Anzahl der kumulierten Fehler bis zum aktuellen Zeitpunkt und dergleichen mittels einer Rechenmaschine in einer Datenbank gespeichert und/oder mittels einer Anzeigeeinrichtung angezeigt werden.

In Abhängigkeit vom Prüfergebnis in Schritt 16 wird in Schritt 20 unterschieden, ob das Bauteil bzw. die derzeit geprüfte Bauteilschicht grundsätzlich in Ordnung oder grundsätzlich nicht in Ordnung ist. Wenn eine Abweichung von den Absolutgrenzwerten festgestellt wurde, sind offenbar eine gravierende Prozessstörung und/oder eine Störung des OT-Systems aufgetreten. In diesem Fall müssen das Herstellungsverfahren und/oder die Ermittlungseinrichtung überprüft und erneut die Schritte 12 bis 16 durchgeführt werden.

Im anderen Fall, das heißt wenn die derzeit geprüfte Bauteilschicht grundsätzlich in Ordnung ist, können gravierende Störungen in der Strahlschmelzanlage oder im Messsystem ausgeschlossen werden. Dementsprechend werden zumindest die vorstehend beschriebenen Verfahrensschritte 12 und 14 in Schritt 22 bzw. 24 mit der jeweils nächsten Bauteilschicht n+1 bis zum Ende des additiven Herstellungsverfahrens 26 wiederholt.

In Schritt 28 werden alle Ist-Werte bzw. Grauwertbilder zu einem zweiten Datensatz zusammengefasst und in Schritt 30 mit einem ersten Datensatz 32 verglichen, um zu prüfen, ob unzulässige Überschreitungen der ermittelten Ist-Werte von vorgegebenen Absolutwerten für das gesamte Bauteil vorliegen. Falls das Bauteil fehlerfrei ist, können die Schichtdaten des Bauteils in Schritt 34 zur Definition des ersten Datensatzes bzw. zur Definition des Soll-Prozesses verwendet werden. Hierzu werden für jede Bauteilschicht n der Modus und/oder das arithmetische Mittel ermittelt (Schritt 36). Weiterhin wird der Mittelwert aller Ist-Werte bestimmt (Schritt 38). Schließlich wird der bauteilortabhängige Verlauf der Streuung für das Bauteil ermittelt (Schritt 40).

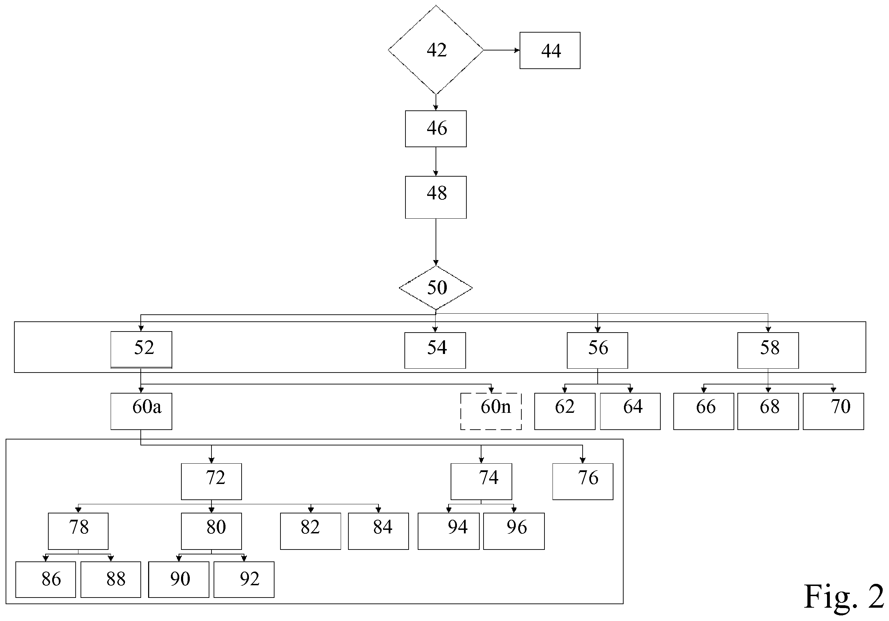

Fig. 2 zeigt ein Flussdiagramm mit den Schritten, die zur Qualitätsbeurteilung des hergestellten Bauteils durchgeführt werden. In Schritt 42 wird zunächst geprüft, ob die ermittelten Ist-Werte des zweiten Datensatzes innerhalb der zulässigen und durch den ersten Datensatz definierten Absolutgrenzen liegen. In einem alternativen Schritt 42 könnte grundsätzlich auch geprüft werden, ob die Mittelwerte der Bauteilschichten jeweils innerhalb entsprechender Absolutgrenzmittelwerte liegen. Falls ein grober Fehler, das heißt eine Überschreitung der vorgegebenen Grenzwerte vorliegt, wird das Verfahren in Schritt 44 zunächst abgebrochen, um die grundsätzliche Funktionsfähigkeit des additiven Herstellungsverfahrens und/oder der Ermittlungseinrichtung (OT-System) zu überprüfen.

Ist sicher gestellt, dass das Herstellungsverfahrens und das OT-System grundlegend funktionieren, werden in Schritt 46 alle Grauwerte des Baujobs bereitgestellt und aus jeder Schicht der Mittelwert oder Modus aller Grauwerte ermittelt. Dadurch erhält man für jede Bauteilsschicht einen Datenpunkt. Anhand dieser Mittelwerte wird eine bauteilgeometrieabhängige Ausgleichsfunktion (Best-Fit-Funktion) ermittelt, die den geometrieabhängigen Grauwertverlauf beschreibt. Abhängig von der Geometrie der aufgebauten Bauteile können unterschiedliche Verläufe der Grauwerte auftreten. Die Art der Ausgleichsfunktion kann daher im einfachsten Fall eine Ausgleichsgerade sein, ebenfalls denkbar sind aber auch alle anderen geeigneten Ausgleichsfunktionen, beispielsweise Polynome n-ten Grades oder sonstige mathematische Beschreibungen, die den Verlauf des Baujobs möglichst exakt abbilden.

Durch definierte Grenzen um diese Ausgleichsfunktion wird der Soll-Prozess näher charakterisiert. Hierzu werden bauteilgeometrieabhängige, dynamische Schwellenwerte ermittelt, die einen normalen Streubereich der einzelnen Bauteilschichten in Abhängigkeit der Bauteilgeometrie und der Bauhöhe definieren.

In Schritt 48 werden nunmehr alle Ist-Werte dahingehend überprüft, ob sie innerhalb der durch die Ausgleichsfunktion und die Schwellenwerte definierten Norm- oder Soll-Grenzen liegen. Falls ja, wird das Bauteil als qualitativ in Ordnung klassifiziert. Ansonsten werden aller Ist-Werte, die außerhalb des Streubereichs liegen, in einem fünften Datensatz zusammengefasst und in Schritt 50 näher bewertet. Diese Bewertung wird anhand mehrerer Qualitätskriterien und Gewichtungsfaktoren durchgeführt.

Als Gewichtungsfaktoren für die Anzeige werden zunächst eine Anzeigenkennzahl 52, die Anzahl der Anzeigen im Bauteil 54, der Abstand zur nächsten Anzeige 56 sowie die Lage im Bauteil 58 verwendet. Ausgehend von der Anzeigenkennzahl 52 können verschiedene Anzeigenarten 60a...60n vorgesehen sein. Ausgehend vom Abstand zur nächsten Anzeige (56) können die Ausprägung in X/Y-Ebene des Bauteils (62) und/oder die Ausprägung in Aufbaurichtung Z des Bauteils (64) zur Qualitätsbeurteilung herangezogen werden. Ausgehend von der Lage im Bauteil (58) kann geprüft werden, ob die Abweichung im Volumen des Bauteils (66) und/oder am Rand des Bauteils (68) liegt und/oder das Bauteil vollständig durchdringt (70).

Als qualitätsrelevante Einflussfaktoren, die einzeln oder in Gruppen angezeigt werden können, werden weiterhin die ermittelten Grauwerte (Ist-Werte 72) und/oder die Größe der im fünften Datensatz vorhandenen Ist-Werte (74) und/oder die durch den fünften Datensatz charakterisierten geometrischen Formen (76) herangezogen. Ausgehend von den ermittelten Grauwerten (72) können die folgenden Parameter, einzeln und in beliebiger Kombination, angezeigt werden:
- die Maximal- und Minimalwerte (78);
- der Mittelwert einer Anzeige (80);
- der Verlauf oder Gradient (82); und/oder
- die Streuung (84).

Anhand der Maximal- und Minimalwerte (78) können weiterhin die entsprechenden Absolutwerte (86) und/oder die relative Lage der Maximal- und Minimalwerte (78) bezogen auf den Modus bzw. Mittelwert (88) angezeigt werden. Entsprechend können ausgehend vom Mittelwert einer Anzeige (80) der entsprechende Absolutwert (90) und/oder die relative Lage von Mittelwert und Modus zueinander (92) angezeigt werden.

Ausgehend von der Größe der im fünften Datensatz vorhandenen Ist-Werte (74) können die folgenden Parameter, einzeln und in beliebiger Kombination, angezeigt werden:
- Ausprägung in X/Y-Ebene (92); und
- Ausprägung in Aufbaurichtung Z (94).

Auf Basis der genannten Charakterisierung und Quantifizierung wird dann eine Güteklasse des Bauteils ermittelt. Beispiele für mögliche Güteklassen sind "Ausschuss", "Gutteil", "Entscheid" oder äquivalente Bezeichnungen. Die zur Quantifizierung der Güteklassen herangezogenen Werte und Parameter können anhand von Erfahrungswerten wie Werkstoffdaten, POD-Daten (Probability Of Detection - Wahrscheinlichkeit für die Erkennung von Merkmalen/Eigenschaften, Auffindwahrscheinlichkeit), NTD/DT Reliablity-Daten (Vertrauenswürdigkeit/Zuverlässigkeit von Methoden zur Werkstoffprüfung, Verhältnis von "korrekten Daten" zu "Fehlalarm") oder dergleichen festgelegt bzw. überprüft werden.

## Patentansprüche

1. Verfahren zur Qualitätsbeurteilung eines mittels eines additiven Herstellungsverfahrens hergestellten Bauteils, insbesondere eines Bauteils für ein Flugtriebwerk, umfassend die Schritte:
a) Bereitstellen eines ersten Datensatzes (32), wobei der erste Datensatz (32) Absolutgrenzwerte umfasst, die jeweils einen maximal zulässigen Wertebereich an einem zugeordneten Bauteilort des herzustellenden Bauteils charakterisieren;
b) Erfassen (12, 28) eines zweiten Datensatzes mittels einer Erfassungseinrichtung, wobei der zweite Datensatz mit dem ersten Datensatz (32) korrespondierende Ist-Werte umfasst, die den zugeordneten Bauteilort des hergestellten Bauteils charakterisieren;
c) Vergleichen (16, 30) des ersten Datensatzes (32) und des zweiten Datensatzes mittels einer Recheneinrichtung und
c1) Klassifizieren (20) des Bauteils als qualitativ grundsätzlich nicht in Ordnung, wenn wenigstens ein Ist-Wert außerhalb seines zugeordneten maximal zulässigen Wertebereichs liegt; oder
c2) Klassifizieren (20) des Bauteils als qualitativ grundsätzlich in Ordnung, wenn kein Ist-Wert außerhalb seines zugeordneten maximal zulässigen Wertebereichs liegt;
**dadurch gekennzeichnet, dass**
- auf das Vorliegen einer gravierenden Störung oder Fehlfunktion geschlossen wird, wenn das Bauteil als qualitativ grundsätzlich nicht in Ordnung klassifiziert wurde; oder
- wenn das Bauteil als qualitativ grundsätzlich in Ordnung klassifiziert wurde:
d) Bereitstellen eines dritten Datensatzes, welcher Mittelwerte umfasst, die mittels der Recheneinrichtung aus mehreren Ist-Werten des zweiten Datensatzes ermittelt werden (46), wobei die mehreren Ist-Werte einen zusammenhängenden Bauteilbereich, bestehend aus mehreren Bauteilorten, charakterisieren;
e) Ermitteln (46) wenigstens einer bauteilgeometrieabhängigen Ausgleichsfunktion anhand des dritten Datensatzes mittels der Recheneinrichtung;
f) Ermitteln (46) von bauteilgeometrieabhängigen Schwellenwerten mittels der Recheneinrichtung, wobei die Schwellenwerte einen zulässigen Streubereich der Ist-Werte um durch die Ausgleichsfunktion vorgegebene Soll-Werte charakterisieren;
g) Prüfen (48) mittels der Recheneinrichtung, ob wenigstens ein Ist-Wert außerhalb des durch die Schwellenwerte charakterisierten Streubereichs liegt, und g
1) wenn kein Ist-Wert außerhalb des Streubereichs liegt, Klassifizieren des Bauteils als qualitativ in Ordnung; oder
g2) wenn wenigstens ein Ist-Wert außerhalb des Streubereichs liegt, Zusammenfassen aller Ist-Werte, die außerhalb des Streubereichs liegen, in einem fünften Datensatz und Beurteilen der Bauteilqualität anhand des fünften Datensatzes und wenigstens eines vorgegebenen Qualitätskriteriums.

2. Verfahren nach Anspruch 1,
**dadurch gekennzeichnet, dass**
als Ermittlungseinrichtung eine optische Tomographieeinrichtung verwendet wird.

3. Verfahren nach Anspruch 1 oder 2,
**dadurch gekennzeichnet, dass**
wenigstens ein Absolutgrenzwert des ersten Datensatzes anhand eines Erfahrungswerts und/oder anhand eines Messwerts eines Referenzbauteils mit fehlerfreiem Gefüge vorgegeben wird.

4. Verfahren nach einem der Ansprüche 1 bis 3,
**dadurch gekennzeichnet, dass**
das additive Herstellungsverfahren und/oder die Ermittlungseinrichtung kontrolliert wird, wenn das Bauteil in Schritt c1) als grundsätzlich nicht in Ordnung klassifiziert wird.

5. Verfahren nach einem der Ansprüche 1 bis 4,
**dadurch gekennzeichnet, dass**
die Mittelwerte des dritten Datensatzes als arithmetisches Mittel und/oder als Modus und/oder als Median und/oder als geometrisches Mittel und/oder als harmonisches Mittel und/oder als quadratisches Mittel und/oder als kubisches Mittel ermittelt werden.

6. Verfahren nach einem der Ansprüche 1 bis 5,
**dadurch gekennzeichnet, dass**
die Mittelwerte des dritten Datensatzes anhand von Ist-Werten ermittelt werden, die eine belichtete Schichtfläche des Bauteils und/oder einen Bereich einer belichteten Schichtfläche des Bauteils charakterisieren.

7. Verfahren nach einem der Ansprüche 1 bis 6,
**dadurch gekennzeichnet, dass**
die Ist-Werte im fünften Datensatz zur Beurteilen der Bauteilqualität zunächst anhand wenigstens eines Gewichtungsfaktors gewichtet werden (50).

8. Verfahren nach Anspruch 7,
**dadurch gekennzeichnet, dass**
als Gewichtungsfaktor eine Anzeigenkennzahl (52) und/oder eine Anzahl (54) der Anzeigen im Bauteil und/oder ein Abstand (56) zu einer benachbarten Anzeige und/oder eine Position (58) im Bauteil verwendet wird.

9. Verfahren nach einem der Ansprüche 1 bis 8,
**dadurch gekennzeichnet, dass**
als Qualitätskriterium ein Farbwert und/oder ein Grauwert (72) und/oder eine Größe (74) und/oder eine Form (76) verwendet wird.

## Claims

1. Method for assessing the quality of a component manufactured by means of an additive manufacturing method, in particular a component for an aircraft engine, comprising the steps of:
a) providing a first data set (32), the first data set (32) comprising absolute limit values, each of which characterizes a maximum permissible value range for an assigned component location of the component to be manufactured;
b) detecting (12, 28) a second data set by means of a detection device, the second data set comprising actual values corresponding to the first data set (32), which characterize the assigned component location of the manufactured component;
c) comparing (16, 30) the first data set (32) and the second data set by means of a computing device and
c1) classifying (20) the component as qualitatively fundamentally unacceptable if at least one actual value is outside the maximum permissible value range assigned thereto; or
c2) classifying (20) the component as qualitatively fundamentally acceptable if no actual value is outside the maximum permissible value range assigned thereto,
**characterized in that**
- the presence of a serious fault or malfunction is inferred if the component has been classified as qualitatively fundamentally unacceptable; or
- if the component has been classified as qualitatively fundamentally acceptable, the following steps are carried out:
d) providing a third data set which comprises mean values that are determined by means of the computing device from a plurality of actual values of the second data set (46), the plurality of actual values characterizing a continuous component region consisting of multiple component locations;
e) determining (46) at least one component-geometry-dependent compensation function on the basis of the third data set by means of the computing device;
f) determining (46) component-geometry-dependent threshold values by means of the computing device, the threshold values characterizing a permissible scatter range of the actual values around target values specified by the compensation function;
g) checking (48), by means of the computing device, whether at least one actual value is outside the scatter range **characterized by** the threshold values, and
g1) classifying the component as qualitatively acceptable if no actual value is outside the scatter range; or
g2) combining all actual values that are outside the scatter range in a fifth data set and assessing the component quality on the basis of the fifth data set and at least one specified quality criterion if at least one actual value is outside the scatter range.

2. Method according to claim 1, **characterized in that** an optical tomography device is used as the determination device.

3. Method according to either claim 1 or claim 2, **characterized in that** at least one absolute limit value of the first data set is specified on the basis of an empirical value and/or on the basis of a measured value of a reference component having an flawless structure.

4. Method according to any of claims 1 to 3, **characterized in that** the additive manufacturing method and/or the determining device is inspected if the component is classified as fundamentally unacceptable in step c1).

5. Method according to any of claims 1 to 4, **characterized in that** the mean values of the third data set are determined as an arithmetic mean and/or as a mode and/or as a median and/or as a geometric mean and/or as a harmonic mean and/or as a quadratic mean and/or a cubic mean.

6. Method according to any of claims 1 to 5, **characterized in that** the mean values of the third data set are determined on the basis of actual values which characterize an exposed layer surface of the component and/or a region of an exposed layer surface of the component.

7. Method according to any of claims 1 to 6, **characterized in that** the actual values in the fifth data set are first weighted on the basis of at least one weighting factor (50) in order to assess the component quality.

8. Method according to claim 7, **characterized in that** an indicator code (52) and/or a number (54) of indicators in the component and/or a distance (56) to an adjacent indicator and/or a position (58) in the component is used as the weighting factor.

9. Method according to any of claims 1 to 8, **characterized in that** a color value and/or a gray value (72) and/or a size (74) and/or a shape (76) is used as the quality criterion.

## Revendications

1. Procédé destiné à évaluer la qualité d'un composant fabriqué au moyen d'un procédé de fabrication additive, en particulier d'un composant pour un moteur d'avion, comprenant les étapes suivantes :
a) fourniture d'un premier ensemble de données (32), le premier ensemble de données (32) comprenant des valeurs limites absolues, chacune caractérisant une plage de valeurs maximale admissible à un emplacement de composant attribué du composant à fabriquer ;
b) détection (12, 28) d'un deuxième ensemble de données au moyen d'un dispositif de détection, le deuxième ensemble de données comprenant des valeurs réelles correspondant au premier ensemble de données (32), lesquelles caractérisent l'emplacement de composant attribué du composant fabriqué ;
c) comparaison (16, 30) du premier ensemble de données (32) et du deuxième ensemble de données au moyen d'un dispositif informatique et
c1) classification (20) du composant comme qualitativement fondamentalement non conforme si au moins une valeur réelle se situe en dehors de sa plage de valeurs maximale admissible attribuée ; ou
c2) classification (20) du composant comme qualitativement fondamentalement conforme si aucune valeur réelle ne se situe en dehors de sa plage de valeurs maximale admissible attribuée ;
**caractérisé en ce que**
- l'existence d'un défaut ou dysfonctionnement grave est déduite si le composant a été classé comme qualitativement fondamentalement non conforme ; ou
- si le composant a été classé comme qualitativement fondamentalement conforme :
d) fourniture d'un troisième ensemble de données qui comprend des valeurs moyennes qui sont déterminées (46) au moyen du dispositif informatique à partir d'une pluralité de valeurs réelles du deuxième ensemble de données, la pluralité de valeurs réelles caractérisant une zone de composant cohérente composée d'une pluralité d'emplacements de composant ;
e) détermination (46) d'au moins une fonction de compensation dépendante de la géométrie du composant sur la base du troisième ensemble de données au moyen du dispositif informatique ;
f) détermination (46) de valeurs de seuil dépendantes de la géométrie du composant au moyen du dispositif informatique, les valeurs de seuil caractérisant une plage admissible d'étalement des valeurs réelles autour de valeurs de consigne prédéfinies par la fonction de compensation ;
g) vérification (48), au moyen du dispositif informatique, si au moins une valeur réelle se situe en dehors de la plage d'étalement **caractérisée par** les valeurs de seuil, et g1)
si aucune valeur réelle ne se situe en dehors de la plage d'étalement, classification du composant comme qualitativement conforme ; ou
g2) si au moins une valeur réelle se situe en dehors de la plage d'étalement, regroupement de toutes les valeurs réelles qui se situent en dehors de la plage d'étalement dans un cinquième ensemble de données, et évaluation de la qualité du composant sur la base du cinquième ensemble de données et d'au moins un critère de qualité prédéfini.

2. Procédé selon la revendication 1,
**caractérisé**
**en ce qu'**un dispositif de tomographie optique est utilisé comme dispositif de détermination.

3. Procédé selon la revendication 1 ou 2,
**caractérisé**
**en ce qu'**au moins une valeur limite absolue du premier ensemble de données est prédéfinie sur la base d'une valeur empirique et/ou sur la base d'une valeur de mesure d'un composant de référence avec une structure sans erreur.

4. Procédé selon l'une quelconque des revendications 1 à 3,
**caractérisé**
**en ce que** le procédé de fabrication additive et/ou le dispositif de détermination sont contrôlés si le composant est classé comme fondamentalement non conforme à l'étape c1).

5. Procédé selon l'une quelconque des revendications 1 à 4,
**caractérisé**
**en ce que** les valeurs moyennes du troisième ensemble de données sont déterminées comme moyenne arithmétique et/ou comme mode et/ou comme médiane et/ou comme moyenne géométrique et/ou comme moyenne harmonique et/ou comme moyenne quadratique et/ou comme moyenne cubique.

6. Procédé selon l'une quelconque des revendications 1 à 5,
**caractérisé**
**en ce que** les valeurs moyennes du troisième ensemble de données sont déterminées sur la base de valeurs réelles qui caractérisent une surface de couche exposée du composant et/ou une région d'une surface de couche exposée du composant.

7. Procédé selon l'une quelconque des revendications 1 à 6,
**caractérisé**
**en ce que** les valeurs réelles dans le cinquième ensemble de données destiné à évaluer la qualité du composant sont d'abord pondérées (50) sur la base d'au moins un facteur de pondération.

8. Procédé selon la revendication 7,
**caractérisé**
**en ce qu'**un code indicateur (52) et/ou un nombre (54) des indicateurs dans le composant et/ou une distance (56) par rapport à un indicateur adjacent et/ou une position (58) dans le composant sont utilisés comme facteurs de pondération.

9. Procédé selon l'une quelconque des revendications 1 à 8,
**caractérisé**
**en ce qu'**une valeur de couleur et/ou une valeur de gris (72) et/ou une taille (74) et/ou une forme (76) sont utilisées comme critères de qualité.
